Europäisches Patentamt

European Patent Office

Office européen des brevets

(19)

(11) Publication number: **0 219 980 B1**

# EUROPEAN PATENT SPECIFICATION

(12)

(45) Date of publication of patent specification: **27.02.91**    (51) Int. Cl.⁵: **G11B  17/035**

(21) Application number: **86307281.5**

(22) Date of filing: **22.09.86**

(54) Device for opening and closing a shutter member provided in a disc cartridge.

(30) Priority: **23.09.85 JP 209537/85**

(43) Date of publication of application:
**29.04.87 Bulletin  87/18**

(45) Publication of the grant of the patent:
**27.02.91 Bulletin  91/09**

(84) Designated Contracting States:
**AT CH DE FR GB IT LI SE**

(56) References cited:
**EP-A- 0 144 068**
**EP-A- 0 157 588**
**DE-A- 3 244 797**
**DE-A- 3 325 648**

(73) Proprietor: **SONY CORPORATION**
**7-35 Kitashinagawa 6-Chome Shinagawa-ku Tokyo 141(JP)**

(72) Inventor: **Nakagawa, Kenzo c/o Patents Division**
**Sony Corporation 6-7-35 Kitashinagawa Shinagawa-ku Tokyo 141(JP)**
Inventor: **Suzuki, Masayuki c/o Patents Division**
**Sony Corporation 6-7-35 Kitashinagawa Shinagawa-ku Tokyo 141(JP)**

(74) Representative: **Pilch, Adam John Michael et al**
**c/o D. Young & Co. 10 Staple Inn London WC1V 7RD(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to devices for opening and closing shutter members provided in disc cartridges, such devices being used in conjunction with signal recording and/or reproducing apparatus. More particularly, the invention relates to such devices for opening and closing a shutter member mounted movably to a disc cartridge for opening and closing signal read and/or write apertures in upper and lower surfaces of the disc cartridge, the disc cartridge containing a disc such as an optical or optomagnetic disc.

The term "signal recording and/or reproducing apparatus" is taken to include a magnetic, an optomagnetic or an optical apparatus in the sense that it makes use of a magnetic, an optomagnetic or an optical disc as the signal recording medium.

It has been proposed for optical or magnetic discs used as signal recording media of signal recording and/or reproducing apparatus to be contained in a disc cartridge for protecting their signal recording surfaces, and to be mounted in the recording and/or reproducing apparatus while they are contained in this manner in the disc cartridge. The disc cartridge containing the disc is provided on its upper and lower surfaces with apertures to be confronted by a pickup unit of the apparatus, such as an optical pickup unit designed to effect signal reading or signal writing operations when the disc cartridge is inserted into the recording and/or reproducing apparatus. There is slidably mounted on the disc cartridge a shutter member arranged to close the apertures in order to prevent damage to or dust deposition on the disc in the cartridge due to opening of the apertures, unless the disc cartridge is mounted in the signal recording and/or reproducing apparatus. For this reason, a device for opening and closing the shutter member has to be provided in a recording and/or reproducing apparatus, such as a disc player, making use of the above-described disc cartridge.

In the above-described recording and/or reproducing apparatus making use of a disc cartridge as the signal recording medium, reading or writing of information signals is possible only when the disc cartridge is correctly introduced into the recording and/or reproducing apparatus, the shutter member is opened by the opening and closing device to open the signal read or write apertures, and the pickup unit faces the disc through these apertures. Thus, when the disc cartridge is inserted incorrectly and placed in the recording and/or reproducing apparatus without the shutter member being opened by the opening and closing device, it is impossible to read or write information signals. In the case of a disc cartridge in which the apertures are to be confronted by a disc table of a disc rotation drive unit and a thrust member is arranged to thrust the disc against the disc table so as to be in continuation with the signal read and write apertures, and those apertures are covered by the shutter member, it is not possible for the disc contained in the cartridge to be chucked to the disc rotation drive unit for rotation in unison therewith unless the shutter member is open.

European Patent Application Publication No. EP-A-O 157 588, published after the priority date of the present application, discloses a device for opening and closing a shutter member provided in a disc cartridge, the device being in the form of a lever which engages the shutter member of the cartridge when the cartridge is inserted into the apparatus. Full insertion of the cartridge causes the lever to rotate, thereby moving the shutter member laterally and thus exposing signal read/write apertures provided in the cartridge. However, there is no means for preventing incorrect (such as back to front) insertion of the disc cartridge.

In recording and/or reproducing apparatus making use of the aforementioned disc cartridge as the signal recording medium, such as a disc player, it is an essential requirement that the mounting of the disc cartridge in the disc mounting unit is enabled when the disc cartridge is correctly introduced into the apparatus and that insertion of the disc cartridge into the apparatus is inhibited in the case of incorrect insertion.

According to the invention there is provided the combination of a disc cartridge and a device for opening and closing a shutter member provided in the disc cartridge, the disc cartridge being insertable into signal recording and/or reproducing apparatus which uses a disc as a signal recording medium, the disc cartridge including the disc in a cartridge housing, said cartridge housing having signal read and/or write apertures in an upper surface and a lower surface thereof, said shutter member being mounted so as to partially cover a front wall, an upper wall and a lower wall of said cartridge housing and being arranged to open and close said apertures, said shutter member having an engaging opening extending in said front wall and said lower wall, wherein said device comprises a pair of shutter member opening and closing members provided in the signal recording and/or reproducing apparatus so as to engage said disc cartridge during insertion thereof, said members having engaging portions for selectively engaging in said engaging opening of said shutter member and for being pivoted by thrust from said disc cartridge during insertion, said shutter member opening and closing members being so arranged that portions of said opening and closing members contact each other to inhibit full insertion of said disc cartridge when the disc cartridge is being inserted from its rear side opposite to its front side covered by said shutter member.

The invention also provides such a disc cartridge and/or such an opening and closing device.

A preferred embodiment of the invention provides a system for positively inhibiting incorrect insertion of the disc cartridge, preventing incorrect insertion of the disc cartridge without providing a separate dedicated device by imparting an incorrect insertion inhibit function to the opening and closing device, thereby avoiding complicating the system.

The preferred embodiment is capable of protecting the disc cartridge by preventing incorrect insertion thereof as well as protecting the pickup unit of the recording and/or reproducing apparatus by preventing incorrect operation of the pickup unit.

The invention will now be described by way of example with reference to the accompanying drawings, throughout which like parts are referred to by like references, and in which:

Figure 1 is a perspective view showing a shutter member opening and closing device according to a preferred embodiment of the present invention;

Figure 2 is a perspective view, seen from above, of a disc cartridge for use with the device shown in Figure 1;

Figure 3 is an exploded perspective view showing the disc cartridge of Figure 2;

Figure 4 is a plan view showing the inside of the upper half of the disc cartridge of Figures 2 and 3;

Figure 5 is a perspective view, seen from below, of the disc cartridge of Figures 2 to 4;

Figure 6 is a plan view showing the disc cartridge inserted into the shutter member opening and closing device;

Figure 7 is a plan view showing first and second shutter member opening and closing arms;

Figure 8 is a perspective view showing a state in which the disc cartridge is abutted and engaged with the first and second shutter member opening and closing arms;

Figure 9 is a plan view showing a state in which the shutter member of the disc cartridge is opened; and

Figure 10 is a plan view showing a state in which the disc cartridge is inserted, from the rear side.

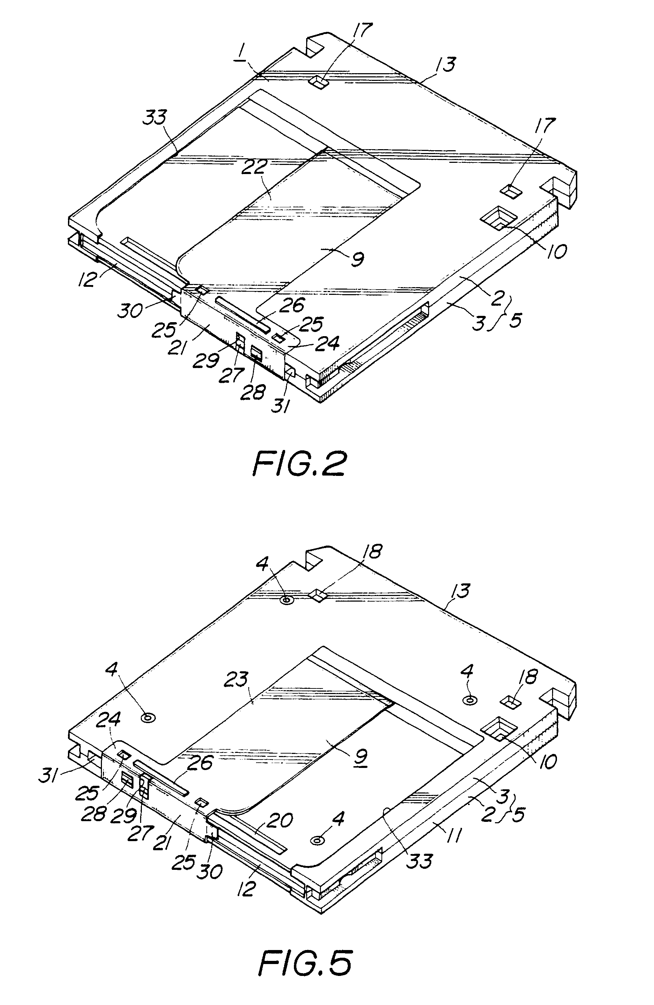

A disc cartridge 1, to which a shutter opening and closing device according to a preferred embodiment of the present invention may be applied, will be described with reference to Figures 2 to 5.

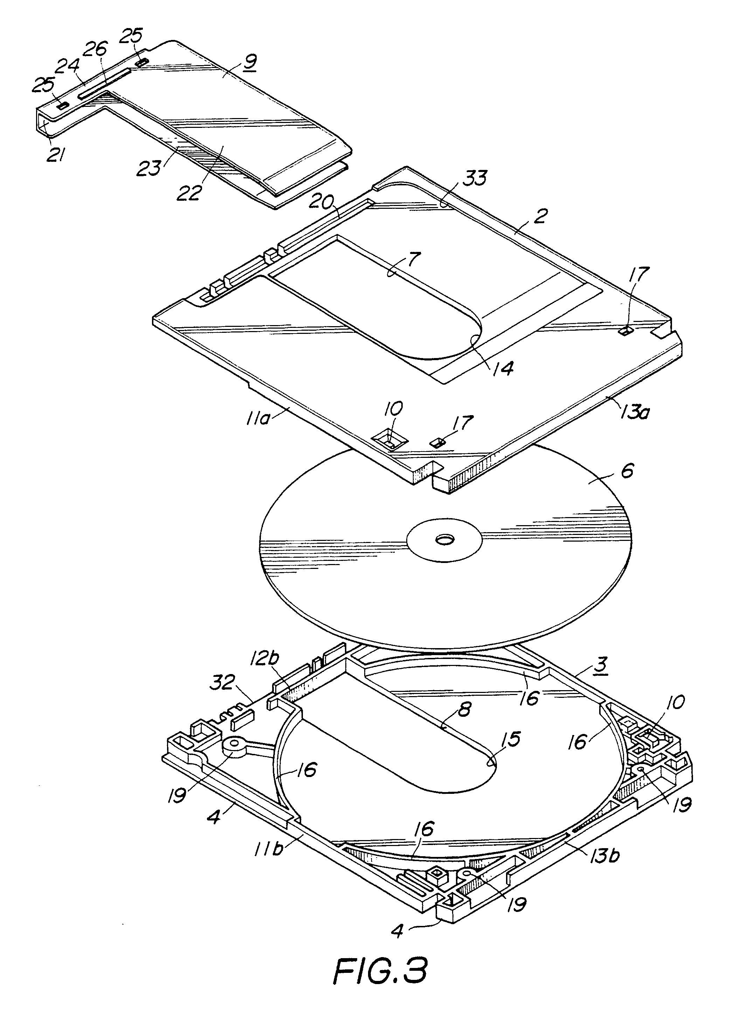

As shown in Figures 2 and 3, the disc cartridge 1 comprises a cartridge casing or housing 5 formed by an upper half 2 and a lower half 3 that are abutted and secured to each other by a number of screws 4, a disc such as an optomagnetic disc 6 rotatably contained in the cartridge housing 5, and a shutter member 9. The upper and lower halves 2 and 3 may be formed by moulding of synthetic material into the shape of flat square plates. The shutter member 9 is slidably mounted to the cartridge housing 5 and arranged to open or close window sections 7 and 8 intended for signal reading or writing and which are formed respectively in the upper half 2 and the lower half 3 making up the cartridge housing 5. In use, an optical pickup unit (not shown) faces these window sections 7 and 8, the pickup unit being designed for writing or reading information signals to or from the disc 6.

Referring to Figures 2 to 5, the upper half 2 and the lower half 3 making up the cartridge housing 5 are configured symmetrically to each other, except that writing protection members 10 for inhibiting writing to the disc 6 are disposed at corresponding positions so that, then the upper and lower halves 2,3 are abutted to and engaged with each other, the protection member 10 on each half is disposed at the opposite position to that on the other half. The upper half 2 and the lower half 3 are so constructed that, when they are abutted and connected to each other, there is defined therebetween a space of a size and shape sufficient to accommodate rotatably the disc 6. On the peripheries of the upper half 2 and the lower half 3 are formed upright wall sections 11a, 11b, 12a, 12b, 13a and 13b that make up left and right side wall members 11, a front wall member 12 and a rear wall member 13 when the wall sections are abutted and connected to one another as shown in Figure 3. At the centre of the upper half 2 and the lower half 3 are formed disc table accommodating apertures 14,15 arranged to be confronted by a disc table of a disc rotation and drive unit which is providing in recording and/or reproducing apparatus and that is designed to rotate the disc 6 contained in the cartridge housing 5. In continuation to these apertures 14,15, there are formed the aforementioned window sections 7,8 that are of the same width as the diameter of the disc table insertion apertures 14,15. The window sections 7,8 are confronted by the optical pickup unit and used for signal reading and writing as indicated above. The window sections 7,8 are formed as approximately rectangular apertures extending from the centre of the upper half 2 and the lower half 3 to the front side wall member 12 to which the shutter member 9 is mounted. A plurality of arcuate rib sections 16 are formed on the inner side of each of the upper half 2 and the lower half 3 and on a circumference of a circle that is centred about the apertures 14,15 and that is slightly larger than the outer perimeter of the disc 6. When abutted to one another, these rib sections 16 cooperate with one another to define wall sections delimiting the disc-containing section while regulating the horizontal position of the disc 6.

On both side corners of the rear side wall member 13 of the upper half 2 and the lower half 3 opposite to the front wall member 12, there are formed reference holes 17,18, that may be engaged by mating positioning pins provided in the recording and/or reproducing apparatus, so as to set the reference mounting position thereof with respect to the disc cartridge 1.

At the back of the cartridge housing 5 and in the vicinity of the reference holes 17,18, in the upper half 2 and the lower half 3, and in the zone delimited by the circular rib sections 16 and the upright wall sections 11a, 11b, 12a, 12b, 13a and 13b at both side corners on the front side of the disc cartridge 1, there are provided four female threaded sections 19 by which the upper half 2 and the lower half 3 are connected and secured to each other.

The upper half 2 and the lower half 3 thus provided with the female threaded sections 19 are connected together by screws 4 engaged in the female threaded sections 19 so as to form the cartridge housing 5 rotatably containing the disc 6.

On the outer surfaces along the front sides of the upper half 2 and the lower half 3 connecting to the window sections 7,8, there are formed slide guide slots 20 for sliding and guiding the shutter member 9 arranged to open and close the window sections 7 and 8.

The shutter member 9 may be formed by a metallic plate such as a stainless steel plate in the form of a letter U in cross-section. It is slidably mounted by virtue of the slide guide slots 20 provided in the upper and lower surfaces of the cartridges housing 5 in opposition to each other. The shutter member 9 is formed by a front web section 21 from the upper and lower sides of which an upper plate or upper shutter plate 22 and a lower plate or lower shutter plate 23 are integrally formed and which extend in parallel to each other. These plates 22,23 are of a size and shape sufficient to cover the window sections 7,8, and apertures 14 and 15 simultaneously. The front web section 21 and adjacent sections of the upper shutter plate 22 and the lower shutter plate 23 of the shutter member 9 cooperate with one another to define a slide guide section 24 for the cartridge housing 5. The slide guide section 24 is extended from one side of each of the upper and lower shutter plates 22,23 along the slide guide slot 20. Thus the shutter member 9 is approximately in the form of a letter U when seen in side view.

On the upper and lower surfaces of the slide guide section 24 of the shutter member 9, there are formed opposing guide tabs 25,25 for extending inwardly into and being guided along the slide guide slot 20. The slide guide section 24 is formed with a rib 26 by drawing between the guide tabs 25,25 in order to prevent flexure of the slide guide section 24 in a direction normal to the direction of the thickness of the disc cartridge 1 otherwise caused as a result of setting the width of the section 24 so as to be longer than that of the upper or lower shutter plates 22,23.

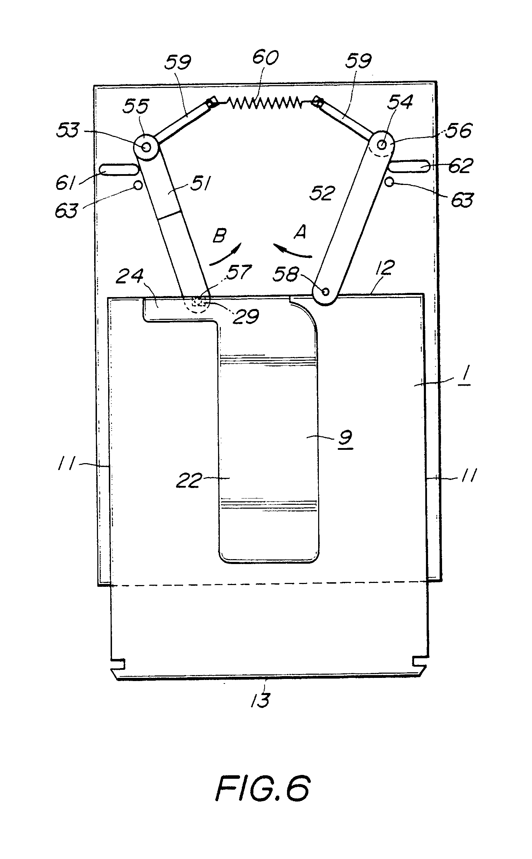

The shutter member 9 is formed, towards one side of the front wall section 21 thereof, with a tab 28 to be engaged by a locking member 27 of the cartridge housing 5 when the shutter member 9 is at a first position closing the window sections 7,8. As shown in Figure 5, the shutter member 9 is also formed with an opening 29 extending in the front web section 21 and in the lower shutter plate 23 so as to be selectively engaged by protuberant shutter member opening and closing pins implanted at the foremost part of shutter opening and closing arms in turn provided in the recording and/or reproducing apparatus, as will be described. In effect, the opening 29 is an L-shaped slot extending in the front web section 21 and in the lower shutter plate 23. In this opening 29 is engaged the aforementioned shutter member opening and closing pin of the shutter member opening and closing arm in a direction normal to the direction of the thickness of the disc cartridge 1. The opening 29 is provided at a position which, when the shutter member 9 is in the first position closing the window sections 7,8 and apertures 14 and 15, is displaced from the widthwise centre of the cartridge housing 5 and in register with a flat section 27c towards the free end of the locking member 27 provided towards one corner of the front side of the cartridge housing 5. At the other end of the front web section 21 of the shutter member 9 opposite the opening 29, the shutter member 9 is formed with a guide section 30 which is bent inwardly such that, when the disc cartridge 1 is inserted into the recording and/or reproducing device, the opening and closing pin not used for opening or closing the shutter member and not engaged in the opening 29 may easily be deviated as it rides on the front web section 21.

The thus-constructed shutter member 9 is mounted so as to overlie the respective upper surfaces and the front wall member 12 of the upper half 2 and the lower half 3 of the cartridge housing 5 for sliding along the slide guide section 24, with the guide tabs 25 being engaged and guided along the slide guide slot 20 in the cartridge housing 5. The cartridge housing 5 is formed at the front wall member 12 thereof with a groove 31 which is formed by partially recessing the front wall section 12 towards the interior of the cartridge housing 5 itself and in which there are slidably disposed the tab 28 and the projecting shutter member opening and closing pins of the shutter member opening and closing arms (to be described later). The portion of the lower half 3 defining the groove 31 is removed for delimiting a cut-out 32 in which the projecting opening and closing pins of the opening and closing arms (to be described later) intrude and slide.

On one of the widthwise sides of the apertures 7, 8,14 and 15 on the upper and lower surfaces of the cartridge housing 5, more specifically, on the side thereof opposite the extension of the slide guide section 24, there is formed a recess 33 for delimiting the extent of sliding movement of the shutter member 9, inclusive of the peripheries of the window sections 7,8 and apertures 14,15. Within the extent of the recess 33, the shutter member 9 is movable between the first position of closing the window sections 7,8 and apertures 14,15 and the second position of opening these window sections and apertures.

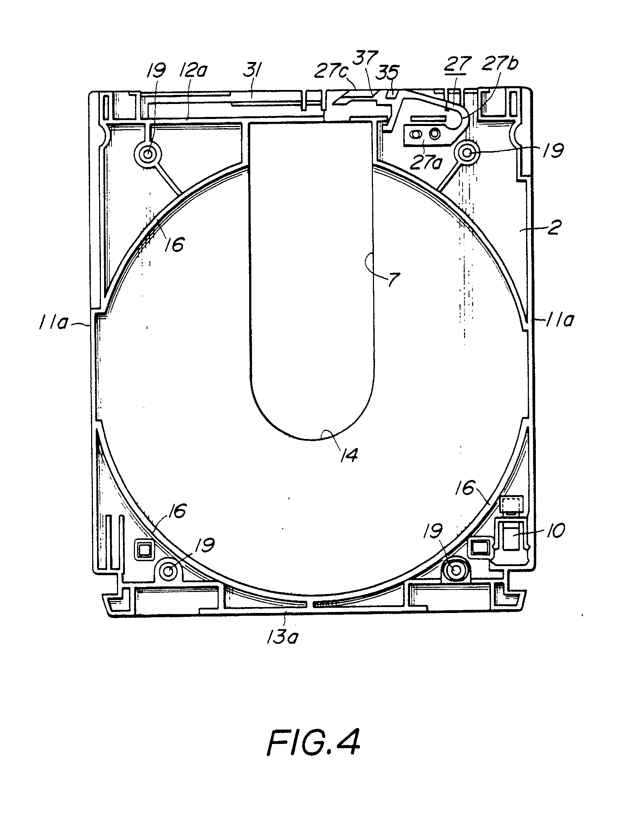

At the inner corner towards the front side of the upper half 2 of the disc cartridge 1, there is mounted the locking member 27 (typically moulded from synthetic material) having a locking recess 35 for locking the shutter member 9. In this recess 35 is engaged the tab 28 for locking the shutter member 9 when the shutter member 9 is in the first position of closing the window sections 7,8 and apertures 14 and 15, as shown in Figure 4. Halfway between a bottom section 27a for mounting the locking member 27 to the upper half 3 and the flat section 27c by way of a resilient deflective section 27b in the form of a semicircle of the locking member 27, and at the free end side of the locking recess 35 thereof which is engaged by the tab 28 of the shutter member 9, there is formed a recess or cut-out 37 in which the tab 28 is inserted and deviated during movement of the shutter member 9.

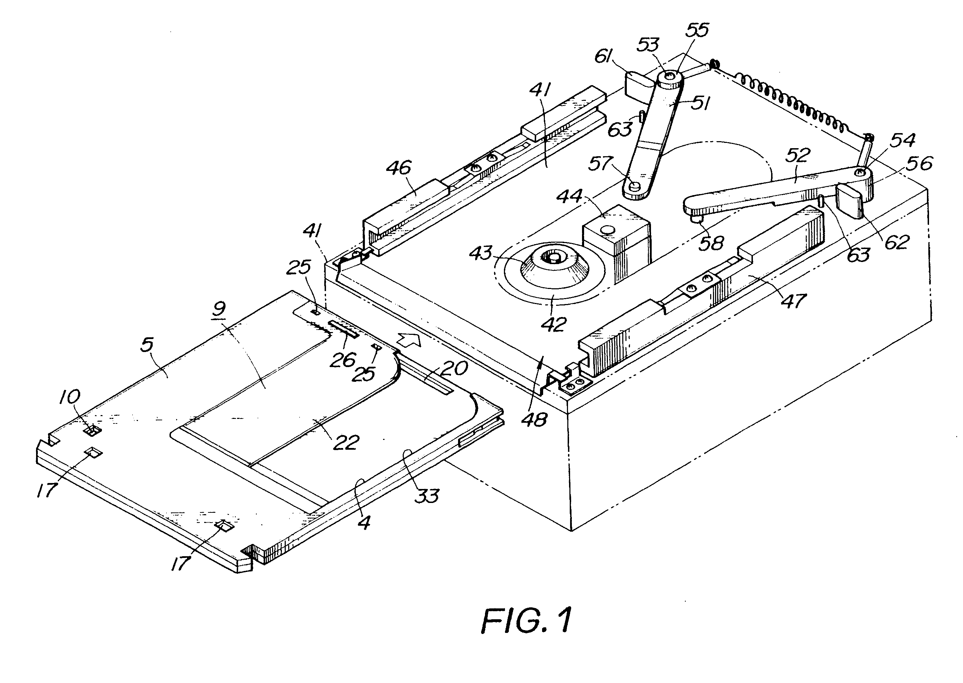

The recording and/or reproducing apparatus into which the above described disc cartridge 1 is to be inserted and mounted will now be explained, with particular reference to Figures 1, 6 and 7.

The recording and/or reproducing apparatus includes a disc mounting section or unit 41 which is provided with a set of heightwise positioning pins (not shown) for engaging in the reference apertures 17 and 18 in the disc cartridge 1 for heightwise positioning of the cartridge 1 as well as another set of pins (also not shown) for supporting the surface of the disc cartridge 1. It is by means of this disc mounting section 41 that the disc cartridge 1 is mounted to the signal recording and/or reproducing apparatus with positioning in the horizontal and heightwise directions. As shown in Figure 1, the disc mounting section 41 is provided with a disc rotation and drive unit 43 provided in turn with a disc table 42 for rotatably driving the disc 6 in the disc cartridge 6, and a chucking device (not shown) for clamping the disc 6 to the disc table 42 so that the disc 6 may be rotated in synchronism with the disc table 42. The apparatus also includes the aforementioned optical pickup unit 44 in facing relation to the lower side of the disc cartridge 1 and mounted to the disc mounting unit 41. The pickup unit 44 is movable between the inner and outer peripheries of the disc 6 for writing or reading information signals to or from the signal recording surface of the disc 6.

The disc mounting section 41 in the recording and/or reproducing apparatus is provided with a frame 45 arranged to support the disc cartridge 1 which is inserted through the disc inserting and removal opening in the outer casing of the recording and/or reproducing apparatus. The supporting frame 45 is vertically movably supported on a chassis provided with the aforementioned disc rotation and drive unit 43 and the pickup unit 44. The supporting frame 45 is in the form of a flat square plate having a width approximately equal to the width of the disc cartridge 1. On both sides of the disc cartridge 1, there are provided channel-shaped supporting sections 46,47 arranged to accept and support both sides of the disc cartridge 1. A front side of the supporting frame 45 is designed with an opening 48 for reception of the disc cartridge 1. The supporting frame 45 is supported vertically movably on the chassis so that, during insertion and removal of the disc cartridge 1, the opening 48 is in a facing relation to the disc insertion and removal opening and so that, during use of the disc cartridge 1, the supporting frame 45 is in the lower position in which it is supported and positioned by the sets of the supporting and positioning pins.

At the inner side of the supporting frame 45 opposite the reception opening 48 for the disc cartridge 1, first and second shutter member opening and closing arms 51,52 are provided in opposition to the insertion direction of the disc cartridge 1. These shutter member opening and closing arms 51 and 52 are provided at the proximate ends thereof with tubular sections 55,56 positioned over supporting shafts 53,54 mounted on the inner corners of the supporting frame 45. At the distal ends of the shutter member opening and closing arms 51,52, there are provided first and second shutter member opening and closing pins 57,58 for selectively engaging in the opening 29 in the disc cartridge 1. The length of the shutter member opening and closing arm 51 between the tubular section 5 and the pin 57 is arranged to be equal to that of the arm 52 between the tubular section 56 and the pin 58.

The supporting shafts 53,54 are implanted symmetrically in the widthwise direction with the rotational centre of the disc rotation drive unit 43 as centre, with the rotational centre being on the centreline along which the disc cartridge 1 is inserted into the frame 45. The first and second shutter member opening and closing arms 51,52 are pivotally mounted by the supporting shafts 53,54 passing through the tubular sections 55,56 such that the first and second shutter member opening and closing pins 57,58 project in mutually opposite directions. Since the first and second shutter member opening and closing arms 51,52 are of the same length and mounted by the supporting shafts 53,54 that are symmetrical with respect to the centreline along which the disc cartridge 1 is inserted, the arms 51,52 are mounted symmetrically with the centre of insertion of the disc cartridge 1 as centre.

The length of the first and second shutter member opening and closing arms 51,52 is selected so that, when they are pivoted about the supporting shafts 53,54 in a direction so as to approach each other, the trajectories of the first and second shutter member opening and closing pins 57,58 implanted on the distal ends of the arms 51,52 strike each other in the course of pivoting of the arms 51,52.

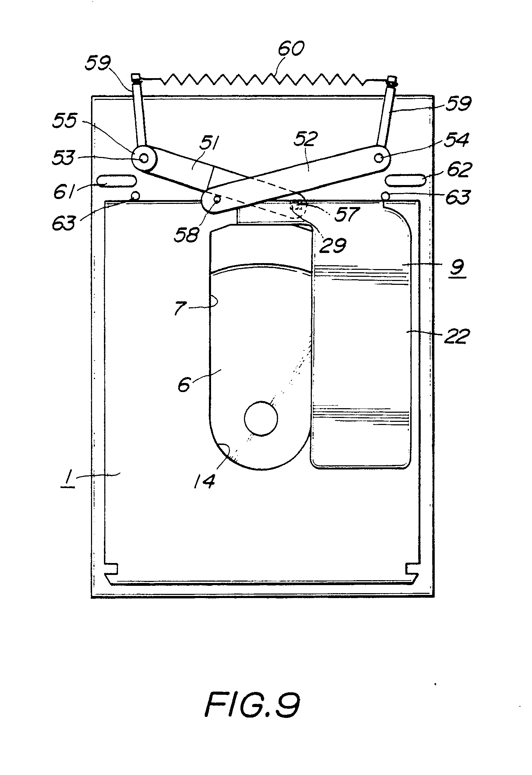

The first and second shutter member opening and closing arms 51,52 are also mounted to the supporting shafts 53,54 with a heightwise gap or spacing larger than the thickness of the disc cartridge 1, in order that the respective one of the first and the second shutter member opening and closing pins 57,58 will be engaged in the opening 29 of the shutter member 9 at the time of insertion of the disc cartridge 1 without the opening and closing arms 51,52 abutting on the disc cartridge 1, as shown in Figure 8.

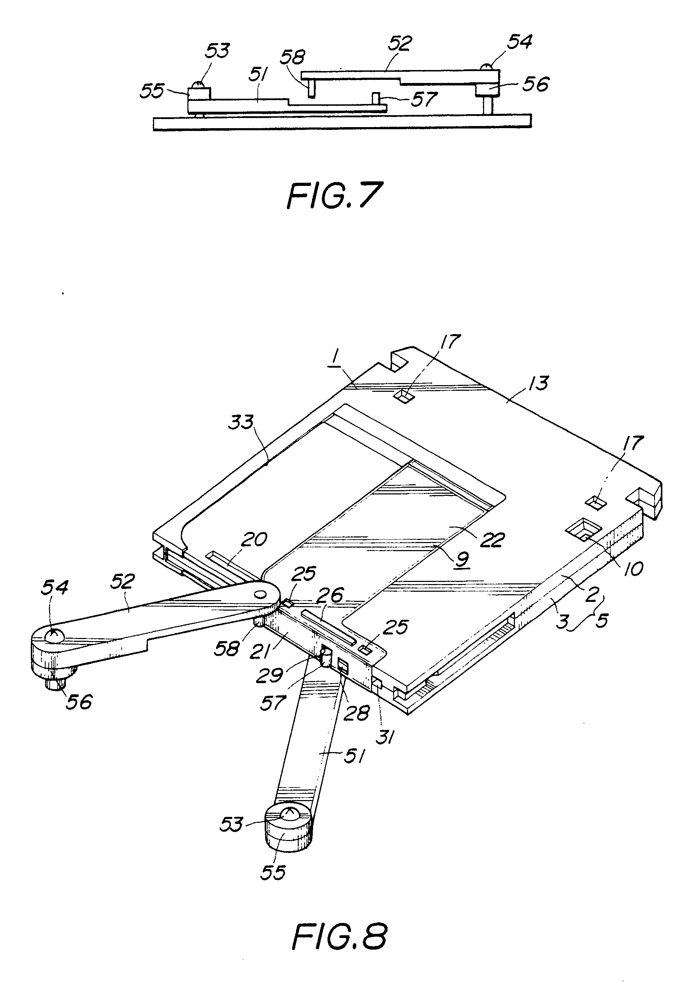

Also, while the first shutter member opening and closing pin 57 has a length sufficient for engagement in the opening 29 in the shutter member 9 of the disc cartridge 1, the second shutter member opening and closing pin 58 is longer than the first shutter opening and closing pin 57, as shown in Figure 7, such that the pins 57,58 impinge on each other in the heightwise direction thereof. Thus, when the first and second shutter member opening and closing arms 51,52 are pivoted simultaneously and to the same extent in the same plane of the disc cartridge 1, the first and second pins 57,58 impinge on each other at the crossing point of the trajectories thereof.

It is to be noted that, for the first and second pins 57,58 to strike each other in the above-described manner, these pins may be of the same height, since it suffices that the pins 57,58 overlap in the heightwise direction.

The first and second shutter member opening and closing arms 51,52 are biased so as to pivot in a direction away from each other or towards the outer sides of the frames 45 by a tension spring 60 retained by shafts 59 projecting from the tubular sections 55,56 in a direction substantially at right angles with the shutter member opening and closing arms 51,52. The rotational biasing position of the first shutter member opening and closing arm 51 is regulated by an arm regulating member 61 such that, when the disc cartridge 1 is introduced into the recording and/or reproducing apparatus with the upper surface of the disc cartridge 1 directed upwards and the first signal recording surface of the disc 6 facing the optical recording unit 44, the first pin 57 on the distal end of the arm 51 is positioned facing the opening 29 of the shutter member 9. In like manner, the rotational biasing position of the second shutter member opening and closing arm 52 is regulated by a second arm regulating member 62 such that, when the disc cartridge 1 is introduced into the recording and/or reproducing aparatus with the lower surface of the disc cartridge 1 directed upwards and the second signal recording surface of the disc 6 facing the optical recording unit 44, the second pin 58 on the distal end of the arm 52 is positioned facing the opening 29 of the shutter member 9.

Towards both sides of the frame 45 and in the vicinity of the first and second arm regulating members 61,62, there are implanted a pair of regulating projections 63 for regulating the limit position of insertion of the disc cartridge 1. When the disc cartridge 1 is inserted until abutment thereof with the regulating projections 63, the shutter member 9 is moved from its first position to its second position by the operation of the first and second shutter member opening and closing arms 51,52 for completely opening the signal read and write sections 7 and 8.

The operation of opening the shutter member 9 by the shutter member opening and closing device having the aforementioned first and second shutter member opening and closing arms 51,52 will now be explained. The opening operation will firstly be described in the situation when the disc cartridge 1 is inserted with the first surface of the disc 6 facing the optical pickup unit, with particular reference to Figures 1, 6, 7, 8 and 9.

It is first assumed that, as shown in Figure 1, the disc cartridge 1 is inserted through the disc inserting and removal opening with the upper surface of the disc cartridge 1 facing upwards and with the first signal recording surface of the disc 6 facing the optical pickup unit 44. As shown in Figures 6 and 8, the first shutter member opening and closing pin 57 at the distal end of the first shutter member opening and closing arm 51 is engaged at this time in the opening 29 in the shutter member 9. At this time, the first shutter member opening and closing pin 57 thrusts the flat section 27c of the locking member 27 of the cartridge housing 5 so as to displace the locking member 27 and disengage the tab 28 from the cut-out 35 of the locking member 27, thereby to permit sliding movement of the shutter member 9.

On the other hand, the second shutter member opening and closing pin 58 at the distal end of the second shutter member opening and closing arm 52 rides on the inclined guide section 30 formed at the other end of the shutter member 9 such that the arm 52 is pivoted in the direction indicated by an arrow mark A in Figure 6 against the urging of the tension spring 60 in advance of pivoting of the first arm 51. In more detail, the second arm 52 is pivoted in advance of pivoting of the first arm 51 by a time interval necessary for the first pin 57 on the first shutter member opening and closing arm 51 to be engaged in the opening 29. As the disc cartridge 1 is inserted further, the first shutter member opening and closing arm 51 is also thrust by the disc cartridge 1 so that the arm 51 starts to pivot against urging of the tension spring 60 in the direction indicated by an arrow mark B in Figure 6. The first shutter member opening and closing pin 57 is engaged at this time in the opening 29 of the shutter member 9, and the shutter member 9 is unlocked, such that the above-described pivoting of the first shutter member opening and closing arm 51 causes the shutter member 9 to be moved from the first position of closing the apertures 7, 8, 14 and 15 towards the second position of opening these apertures 7, 8, 14 and 15. As the disc cartridge 1 is inserted further until abutment thereof with the regulating projections 63, the shutter member 9 is completely shifted by the first arm 51 to the second position of opening the apertures 7, 8, 14 and 15.

On the other hand, the second shutter member opening and closing arm 52, pivoted in advance of the first arm 51, is pivoted with the second shutter member opening and closing pin 58 thereof sliding on the front wall section 21 of the shutter member 9, starting from the inclined guide section 30. At this time, the first and second shutter member opening and closing arms 51,52 are pivoted with a relative shift in the timing of the initial movement thereof and thus without the first and second shutter member opening and closing pins 57,58 striking each other, in other words their movement is staggered.

The operation of opening the shutter member when the disc cartridge 1 is inserted with the second surface of the disc 6 facing the optical pickup unit 44 will now be described. This operation is effectively the reverse of the above-described state of operation of inserting the disc cartridge with the first surface of the disc 6 facing the optical pickup unit. Thus the second shutter member opening and closing pin 58 at the distal end of the second arm 52 is engaged in the opening 29 of the shutter member 9, whilst the first shutter member opening and closing pin 57 at the distal end of the first shutter member opening and closing arm 51 rides on the inclined guide section 30 at the other end of the shutter member 9. The first shutter member opening and closing arm 51 is pivoted against the urging of the tension spring 60 in advance of pivoting of the second arm 52.

When the disc cartridge 1 is inserted until abutment thereof with the regulating projections 63, the shutter member 9 is shifted to the second position by the second shutter member opening and closing arm 52 for completely opening the apertures 7, 8, 14 and 15.

The shutter member opening operation is otherwise the same as that described hereinabove with the first surface of the disc 6 facing the optical pickup unit 44, except that the operation of the first arm 51 and that of the second arm 52 are interchanged. Therefore, a detailed description will be omitted for simplicity.

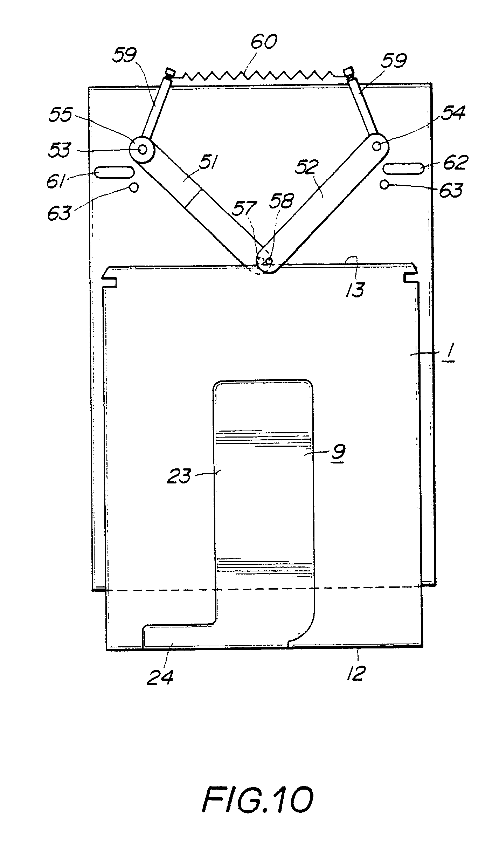

Referring to Figure 10, when the disc cartridge 1 is inserted in error at the side of the rear wall 13 opposite to the shutter member 9, instead of at the side of the shutter member 9, the first and second shutter member opening and closing pins 57,58 at the distal ends of the first and second arms 51,52 abut on the flat rear wall 13 of the disc cartridge 1. Since the first and second shutter opening and closing pins 57,58 are pressured by the common rear wall 13 of the disc cartridge 1 in abutment therewith, the first and second arms 51,52 start to pivot simultaneously. The result is that the first and second shutter member opening and closing pins 57,58 abut on each other at the point of intersection of the rotational trajectories of the first and second arms 51,52, as shown in Figure 10, so as to inhibit further pivoting of the first and second shutter member opening and closing arms 51,52 and hence any further incorrect insertion of the disc cartridge 1.

According to the embodiment described above, when the disc cartridge 1 is incorrectly inserted at the rear side opposite to the front side covered by the shutter member 9, the shutter member opening and closing arms provided in the way of insertion of the disc cartridge, and having projections for selective engagement in the opening in the shutter member of the disc cartridge, are pivoted to cause the projections to strike each other such that further incorrect insertion of the disc cartridge is prevented through inhibition of further pivoting of the shutter member opening and closing arms, and hence any further insertion of the disc cartridge cannot take place.

The above-described system for inhibiting incorrect insertion of the disc cartridge is included in the opening and closing device for the shutter member so that a simplified system is provided for preventing the disc cartridge from being inserted incorrectly. In addition, since the disc cartridge is prevented in this manner from being introduced incorrectly, it is possible to protect the disc cartridge and the pickup unit of the recording and/or reproducing apparatus against incorrect operation of the unit, while also protecting the disc rotation drive unit as well as the disc chucking unit.

## Claims

1. The combination of a disc cartridge (1) and a device for opening and closing a shutter member (9) provided in the disc cartridge (1), the disc cartridge (1) being insertable into signal recording and/or reproducing apparatus which uses a disc (6) as a signal recording medium, the disc cartridge (1) including the disc (6) in a cartridge housing (5), said cartridge housing (5) having signal read and/or write apertures (7,8) in an upper surface and a lower surface thereof, said shutter member (9) being mounted so as to partially cover a front wall (12), an upper wall (2) and a lower wall (3) of said cartridge housing (5) and being arranged to open and close said apertures (7,8), said shutter member (9) having an engaging opening (29) extending in said front wall (12) and said lower wall (3), wherein said device comprises a pair of shutter member opening and closing members (51,52) provided in the signal recording and/or reproducing apparatus so as to engage said disc cartridge (1) during insertion thereof, said members (51,52) having engaging portions (57,58) for selectively engaging in said engaging opening (29) of said shutter member (9) and for being pivoted by thrust from said disc cartridge (1) during insertion, said shutter member opening and closing members (51,52) being so arranged that portions of said opening and closing members (51,52) contact each other to inhibit full insertion of said disc cartridge (1) when the disc cartridge (1) is being inserted from its rear side (13) opposite to its front side covered by said shutter member (9).

2. The combination according to claim 1 wherein said engaging portions (57,58) are arranged to extend in a direction normal to the plane of pivoting of said shutter member opening and closing members (51,52).

3. The combination according to claim 1 or claim 2 wherein said portions of said opening and closing members (51,52) arranged to contact each other are said engaging portions (57,58).

4. A device for opening and closing a shutter member (9) provided in a disc cartridge (1) as defined in claim 1, claim 2 or claim 3.

5. A disc cartridge (1) as defined in claim 1, claim 2 or claim 3.

## Revendications

1. Combinaison d'une cartouche à disque (1) et d'un dispositif pour ouvrir et fermer un organe d'obturation (9) disposé dans la cartouche à disque (1), la cartouche à disque (1) pouvant être insérée dans un appareil d'enregistrement et/ou de reproduction de signal qui utilise un disque (6) en tant que support d'enregistrement de signal, la cartouche à disque (1) comprenant le disque (6) dans un boîtier de cartouche (5), ce boîtier de cartouche (5) ayant des ouvertures de lecture et/ou d'écriture de signal (7, 8) ménagées dans une surface supérieure et une surface inférieure de celui-ci, l'organe d'obturation (9) étant monté de façon à couvrir partiellement une paroi avant (12), une paroi supérieure (2) et une paroi inférieure (3) du boîtier de cartouche (5) et étant disposé de façon à ouvrir et fermer ces ouvertures (7, 8), l'organe d'obturation (9) ayant une ouverture d'engagement (29) s'étendant sur la paroi avant (12) et la paroi inférieure (3), dans laquelle le dispositif comprend une paire d'organes d'ouverture et de fermeture de l'organe d'obturation (51, 52) disposés dans l'appareil d'enregistrement et/ou de reproduction de signal, afin de venir en contact avec la cartouche à disque (1) pendant son introduction, ces organes (51, 52) ayant des parties d'engagement (57, 58) pour s'engager de façon sélective dans l'ouverture d'engagement (29) de l'organe d'obturation (9) et pour être pivotées sous l'effet de la poussée de la cartouche à disque (1) pendant son insertion, les organes d'ouverture et de fermeture de l'organe d'obturation (51, 52) étant disposés de sorte que des parties des organes d'ouverture et de fermeture (51, 52) soient en contact l'une avec l'autre afin d'interdire l'insertion complète de la cartouche à disque (1) lorsque la cartouche à disque (1) est en train d'être insérée à partir de son côté arrière (13) opposé à son côté avant qui est couvert par l'organe d'obturation (9).

2. Combinaison selon la revendication 1, dans laquelle les parties d'engagement (57, 58) sont disposées de façon à s'étendre selon un direction perpendiculaire au plan de pivotement des organes d'ouverture et de fermeture de l'organe d'obturation (51, 52).

3. Combinaison selon la revendication 1 ou 2, dans laquelle les parties des organes d'ouverture et de fermeture (51, 52), disposées de façon à venir en contact l'une avec l'autre sont les parties d'engagement (57, 58).

4. Dispositif d'ouverture et de fermeture d'un organe d'obturation (9) disposé dans une cartouche à disque (1) tel que défini dans la revendication 1, la revendication 2 ou la revendication 3.

5. Cartouche à disque (1) telle que définie dans la revendication 1, la revendication 2 ou la revendication 3.

**Ansprüche**

1. Kombination aus einer Plattenkassette (1) und einer Vorrichtung zum Öffnen und Schließen einer in der Plattenkassette vorgesehenen Verschlußeinrichtung (9), wobei die Plattenkassette (1) in ein eine Platte (6) als ein Signalaufzeichnungsmedium benutzendes Signal-Aufzeichnungs- und/oder -Wiedergabegerät einfügbar ist, wobei die Plattenkassette (1) die Platte (6) in einem Kassettengehäuse (5) enthält, wobei das Kassettengehäuse (5) in einer oberen Fläche und einer unteren Fläche Signal-Lese- und/oder -Schreiböffnungen (7, 8) aufweist, wobei die Verschlußeinrichtung (9) so befestigt ist, daß sie eine vordere Wand (12), eine obere Wand (2) und eine untere Wand (3) des Kassettengehäuses (5) teilweise bedeckt, und derart angeordnet ist, daß sie die Öffnungen (7, 8) öffnet und schließt, wobei die Verschlußeinrichtung (9) eine in der vorderen Wand (12) und der unteren Wand (3) sich erstreckende Eingriffsöffnung (29) aufweist, wobei die Vorrichtung ein Paar Verschlußeinrichtungs-Öffnungs- und -Schließteile (51, 52) aufweist, die in dem Signal-Aufzeichnungs- und/oder -Wiedergabegerät derart vorgesehen sind, daß sie in die Plattenkassette (1) während deren Einfügung kontaktieren, wobei die Teile (51, 52) durch einen Druck von der Plattenkassette (1) während des Einfügens verdrehbare Eingriffsabschnitte (57, 58) zum wahlweisen Eingreifen in die Eingriffsöffnung (29) der Verschlußeinrichtung (9) aufweisen, wobei die Verschlußeinrichtungs-Öffnungs-und Schließteile (51, 52) so angeordnet sind; daß Abschnitte der Öffnungs- und Schließteile (51, 52) einander kontaktieren, um ein vollständiges Einfügen der Plattenkassette (1) zu unterbinden, wenn die Plattenkassette (1) mit ihrer gegenüber deren durch die Verschlußeinrichtung (9) bedeckten Vorderseite liegenden Rückseite (13) eingefügt wird.

2. Kombination nach Anspruch 1, wobei die Eingriffsabschnitte (57, 58) so angeordnet sind, daß sie sich in einer zur Drehebene der Verschlußeinrichtungs-Öffnungs- und -Schließteile (51, 52) normalen Richtung erstrecken.

3. Kombination nach Ansprch 1 oder 2, wobei die einander kontaktierenden Abschnitte der Öffnungs- und Schließteile (51,52) die Eingriffsabschnitte (57, 58) sind.

4. Vorrichtung zum Öffnen und Schließen einer in einer Plattenkassette (1) vorgesehenen Verschlußeinrichtung (9), wobei die Vorrichtung wie im Anspruch 1, Anspruch 2 oder Anspruch 3 definiert ist.

5. Plattenkassette (1) wie im Anspruch 1, Anspruch 2 oder Anspruch 3 definiert.

**FIG. 1**

EP 0 219 980 B1

FIG.2

FIG.5

FIG.3

FIG.4

FIG.6

FIG.7

FIG.8

FIG.9

FIG.10